# FASCICULE DE BREVET EUROPEEN

(11) **EP 3 865 030 B1**
(45) Date de publication et mention de la délivrance du brevet: **28.08.2024**
(21) Numéro de dépôt: 21156066.9
(22) Date de dépôt: 09.02.2021
(51) Int. Cl.: A47J 37/07

(54) **BARBECUE ET BLOC POUR BARBECUE**
GRILL UND BLOCK FÜR GRILL
BARBECUE AND UNIT FOR BARBECUE

(30) Priorité: 14.02.2020 FR 2001498; 14.02.2020 FR 2001497
(43) Date de publication de la demande: 18.08.2021
(73) Titulaire: Application des Gaz, 69230 Saint-Genis Laval (FR)
(72) Inventeur: ARNAUD, Sylvain (Jean-Marc), 69630 CHAPONOST (FR)
(74) Mandataire: Page White Farrer

(56) Documents cités:
- WO-A1-2019/084630
- US-A1- 2003 213 484
- US-A1- 2018 325 314

## Description

### Domaine

La présente demande concerne un barbecue et un bloc pour un barbecue.

### Etat de la technique

On connaît par le document FR3003149A1 un barbecue à gaz du type comportant un chariot et divers éléments montés sur le chariot tels qu'une grille de cuisson, une plaque de cuisson, des brûleurs à gaz, des boutons de régulation d'alimentation en gaz, des boutons de mise à feu ou encore des tiroirs de collection de graisses de cuisson.

Bien qu'apportant satisfaction un tel type de barbecue à gaz peut encore être amélioré. En particulier, le montage, le démontage, la maintenance, le nettoyage ou encore l'utilisation peuvent être facilités. La présente demande vise à atteindre tout ou partie de ces objectifs.

US2018325314A1 concerne un ensemble gril qui comprend une grille ayant une surface supérieure configurée pour supporter un aliment à cuire, une chambre de cuisson, un brûleur à gaz ou un brûleur à granulés, et un récipient.

WO2019084630A1 concerne un barbecue comprenant une chambre de source de chaleur formée avec une paroi d'enceinte, ledit barbecue comprenant un système de support pour supporter au moins une plaque de cuisson ou une grille ou d'autres moyens de support d'aliments, dans lequel ladite paroi d'enceinte comprend une partie de paroi amovible qui est séparable du reste dudit mur.

### Résumé

L'invention concerne un barbecue tel que défini par les revendications. Les aspects de la présente divulgation ne tombant pas dans le champ de protection des revendications ne font pas partie de l'invention mais peuvent être utiles à sa compréhension.

Un aspect de la présente demande concerne un barbecue comportant: un cadre; et un bloc comprenant un organe de génération de chaleur et un organe de régulation d'alimentation couplé à l'organe de génération de chaleur, le bloc étant configuré pour être monté sur le cadre d'un seul tenant et en alternance démonté du cadre d'un seul tenant.

Le bloc peut être monté sur le cadre en configuration d'utilisation. Le bloc peut être démonté du cadre en configuration de nettoyage. Le bloc peut être monté sur le cadre sans séparer l'organe de génération de chaleur et l'organe de régulation d'alimentation. Le bloc peut être démonté du cadre d'un seul tenant sans séparer l'organe de génération de chaleur et l'organe de régulation d'alimentation. Ainsi, le montage et le démontage du barbecue peuvent être facilités.

Le barbecue peut être un barbecue à gaz, l'organe de génération de chaleur peut être un brûleur et l'organe de régulation d'alimentation peut être un organe de régulation d'alimentation en gaz.

Alternativement, le barbecue peut être un barbecue électrique, l'organe de génération de chaleur peut être une résistance électrique et l'organe de régulation d'alimentation peut être un organe de régulation d'alimentation en électricité.

Le barbecue peut comporter un collecteur de graisses de cuisson disposé à l'aplomb du bloc.

Le bloc peut être configuré pour être monté sur le cadre par une face avant du barbecue et en alternance démonté du cadre par la face avant du barbecue.

Le bloc peut être configuré pour être monté sur le cadre par mouvement horizontal d'avant en arrière et en alternance démonté du support par mouvement horizontal d'arrière en avant ; et/ou le bloc peut être configuré pour être monté sur le cadre par mouvement vertical de haut en bas et en alternance démonté du cadre par mouvement vertical de bas en haut.

Le bloc peut être configuré pour être verrouillé sur le cadre et en alternance déverrouillé du cadre.

Le bloc peut être verrouillé sur le cadre en configuration d'utilisation et déverrouillé du cadre en configuration de nettoyage. Ainsi, le risque de démontage accidentel du bloc en configuration d'utilisation est réduit.

Le bloc peut être configuré pour être verrouillé horizontalement sur le cadre et en alternance déverrouillé horizontalement du cadre.

Le bloc peut être verrouillé sur le cadre et déverrouillé du cadre par l'intermédiaire d'une paroi latérale d'une cuve de cuisson.

Le bloc peut comprend en outre : un boîtier; une batterie ; un organe de mise à feu couplé à l'organe de génération de chaleur; un indicateur lumineux de mise à feu couplé à l'organe de génération de chaleur; un circuit électronique connectant la batterie à l'organe de mise à feu; et/ou au moins un circuit électronique connectant la batterie à l'indicateur lumineux de mise à feu.

Le bloc peut comprendre tout ou partie des composants électroniques et des composants gaz du barbecue. Le bloc peut être monté sur le cadre sans séparer les composants électroniques et les composants gaz du barbecue. De même, le bloc peut être démonté du cadre sans séparer les composants électroniques et les composants gaz du barbecue. Ainsi, le montage et le démontage du barbecue peuvent être facilités plus encore.

Le bloc peut comprendre un bouclier thermique configuré pour isoler thermiquement l'organe de régulation d'alimentation; la batterie ; l'organe de mise à feu; l'indicateur lumineux de mise à feu ; le circuit électronique connectant la batterie à l'organe de mise à feu; et/ou le circuit électronique connectant la batterie à l'indicateur lumineux de mise à feu.

Le bouclier thermique peut protéger tout ou partie des composants électroniques de la chaleur généré par l'organe de génération de chaleur en configuration d'utilisation. Ainsi, le risque d'altération des composants électroniques en configuration d'utilisation peut être réduit et la durée de vie du barbecue peut être allongée.

Le barbecue peut comporter en outre un collecteur de graisses de cuisson configuré pour être monté sur le cadre par une face avant du barbecue et en alternance démonté du cadre par la face avant du barbecue.

Le collecteur de graisses de cuisson peut être monté sur le cadre en configuration d'utilisation. Le collecteur de graisses de cuisson peut être démonté du cadre en configuration de nettoyage. Le collecteur de graisses de cuisson peut être monté sur le cadre par la face avant (et non par une face latérale ou une face arrière). Le collecteur de graisses de cuisson peut être démonté du cadre par la face avant (et non par une face latérale ou une face arrière). Ainsi, le montage et le démontage du barbecue peuvent être facilités.

Le collecteur de graisses de cuisson peut comporter un orifice de vidange.

L'orifice de vidange permet d'effectuer une vidange des graisses de cuisson collectées dans le collecteur de graisses de cuisson en configuration d'utilisation sans démonter complètement le collecteur de graisses de cuisson du support et sans pencher ou retourner le collecteur de graisses de cuisson. Ainsi, les risques de salissure du barbecue et de brûlure de l'utilisateur sont réduits.

L'orifice de vidange peut être disposé sur une paroi de fond du collecteur de graisses de cuisson.

L'orifice de vidange permet d'effectuer une vidange des graisses de cuisson collectées dans le collecteur de graisses de cuisson en configuration d'utilisation en laissant un minimum de graisses de cuisson résiduelles. Ainsi, le nettoyage du collecteur de graisses de cuisson est facilité.

La paroi de fond peut être conformée de manière à guider les graisses de cuisson collectées dans le collecteur de graisses de cuisson vers l'orifice de vidange par écoulement.

Ainsi, l'orifice de vidange permet d'effectuer une vidange des graisses de cuisson collectées dans le collecteur de graisses de cuisson en configuration d'utilisation sans laisser de graisses de cuisson résiduelles. Ainsi, le nettoyage du collecteur de graisses de cuisson est encore plus facilité.

La paroi de fond peut comprendre une pluralité de portions convergeant vers l'orifice de vidange.

La paroi de fond peut comprendre une pluralité de portions trapézoïdales convergeant vers l'orifice de vidange.

Le barbecue peut comporter une plaque de cuisson ou une grille de cuisson, dans lequel la plaque de cuisson ou la grille de cuisson comporte au moins un orifice; et dans lequel le collecteur de graisses de cuisson et la plaque de cuisson ou la grille de cuisson sont configurés pour être agencés de sorte que le collecteur de graisses de cuisson soit disposé sous l'orifice.

L'orifice permet aux graisses de cuisson d'être collectées par le collecteur de graisses de cuisson. L'orifice permet alternativement ou également de verser de l'eau dans le collecteur de graisses de cuisson afin d'éviter que les graisses de cuisson n'accrochent au collecteur de graisses de cuisson sans démonter le collecteur de graisses de cuisson du support. Ainsi, le nettoyage du collecteur de graisses de cuisson peut être facilité.

Le collecteur de graisses de cuisson peut comporter un obturateur configuré pour obturer l'orifice de vidange et en alternance désobturer l'orifice de vidange.

L'obturateur permet d'effectuer la vidange des graisses de cuisson collectées dans le collecteur de graisses de cuisson de manière contrôlée par exemple lorsque les graisses de cuisson ne sont plus brûlantes. Ainsi, le risque de brûlure de l'utilisateur est réduit.

Le barbecue peut comporter un organe de commande configuré pour être déplacé entre une première position de commande dans laquelle l'organe de commande commande l'obturateur de manière à obturer l'orifice de vidange et en alternance dans une seconde position de commande dans laquelle l'organe de commande commande l'obturateur de manière à désobturer l'orifice de vidange.

L'organe de commande peut être disposé à l'extérieur du collecteur de graisses de cuisson de manière à permettre le déplacement de l'organe de commande sans toucher les graisses de cuisson.

Le barbecue peut comporter un premier collecteur de graisses de cuisson configuré pour être monté sur le cadre par la face avant du barbecue et en alternance démonté du cadre par la face avant du barbecue et un second collecteur de graisses de cuisson configuré pour être monté sur le cadre par la face avant du barbecue et en alternance démonté du support par la face avant du barbecue; le premier collecteur de graisses de cuisson peut être configuré pour collecter des premières graisses de cuisson et le second collecteur de graisses de cuisson peut être configuré pour collecter des secondes graisses de cuisson.

Le premier collecteur de graisses de cuisson peut être configuré pour collecter des premières graisses de cuisson produites par la cuisson de viandes sur une première portion d'une plaque, grille et/ou broche de cuisson. Le second collecteur de graisses de cuisson peut être configuré pour collecter des secondes graisses de cuisson produites par la cuisson de légumes ou poissons sur une seconde portion de la plaque, grille et/ou broche de cuisson. Ainsi, les premières et secondes graisses de cuisson peuvent être collectées séparément et utilisées pour la réalisation de différentes sauces.

Le barbecue peut comporter un récipient ou un accessoire agencé pour récupérer les graisses de cuisson en provenance du ou des colleteurs de graisses de cuisson.

Le collecteur de graisses de cuisson peut avoir une capacité d'au moins 1 litre et est disposé à l'aplomb d'un brûleur de manière à permettre une hydratation d'aliment disposés sur une grille de cuisson ou une plaque de cuisson lorsque le collecteur de graisses de cuisson est rempli d'eau.

Une capacité minimum de 1 Litre pour un brûleur permet de créer une quantité de vapeur d'eau suffisante lors de la cuisson afin d'hydrater les aliments. Une capacité minimum de 1,5 Litre pour deux brûleurs permet de créer une quantité de vapeur d'eau suffisante lors de la cuisson afin d'hydrater les aliments. Une capacité maximum de 3 litres pour un ou deux brûleurs permet de limiter la taille du collecteur de graisses de cuisson.

Le collecteur de graisses de cuisson peut être séparé du brûleur d'une distance comprise entre 9cm et 14cm. La distance actuelle entre un axe du brûleur et le fond du collecteur de graisses de cuisson peut être de l'ordre de 11,5 cm.

Le collecteur de graisses de cuisson peut être séparé de la grille de cuisson ou de la plaque de cuisson d'une distance comprise entre 17cm et 22cm.

La distance entre un axe du brûleur et le dessus de la plaque de cuisson ou de la grille de cuisson peut être de l'ordre de 8 cm.

Ces aspects seront bien compris à l'aide de la description qui suit en référence aux dessins schématiques annexés représentant à titre d'exemple non limitatif une forme d'exécution.

### Brève description des dessins

Figure 1 est une vue en perspective de dessus d'un barbecue dans une configuration d'utilisation ;
Figure 2 est une vue en perspective de dessus du barbecue de Figure 1 dans une première configuration de nettoyage dans laquelle une plaque de cuisson et une grille de cuisson sont enlevées du barbecue;
Figure 3 est une vue en perspective de dessus du barbecue de Figure 1 dans une deuxième configuration de nettoyage dans laquelle des parois latérales d'une cuve de cuisson sont enlevées du barbecue sans outils ;
Figure 4 est une vue en perspective de dessus du barbecue de Figure 1 dans une troisième configuration de nettoyage dans laquelle des tiroirs de collection de graisses de cuisson sont enlevés du barbecue ;
Figure 5 est une vue en perspective de dessus du barbecue de Figure 1 dans une configuration permettant d'enlever un bloc technique gaz en vue de maintenance ou réparation, par exemple auprès d'un service après-vente. ;
Figure 6 est une vue en perspective de dessus d'un tiroir de collection de graisses de cuisson pour le barbecue de Figure 1 ;
Figure 7 est une représentation schématique en perspective de dessus d'un cadre pour le barbecue de Figure 1 ;
Figure 8 est une vue en perspective de dessus de parois latérales avant d'une cuve de cuisson et d'un bloc technique gaz pour le barbecue de Figure 1 ;
Figure 9 est une vue en perspective de dessous du bloc technique gaz de Figure 8 ; et
Figure 10 est une vue en perspective de dessus dans une configuration dans laquelle des graisses de cuisson collectées dans un tiroir de collection de graisses de cuisson sont évacuées.

### Description détaillée des dessins

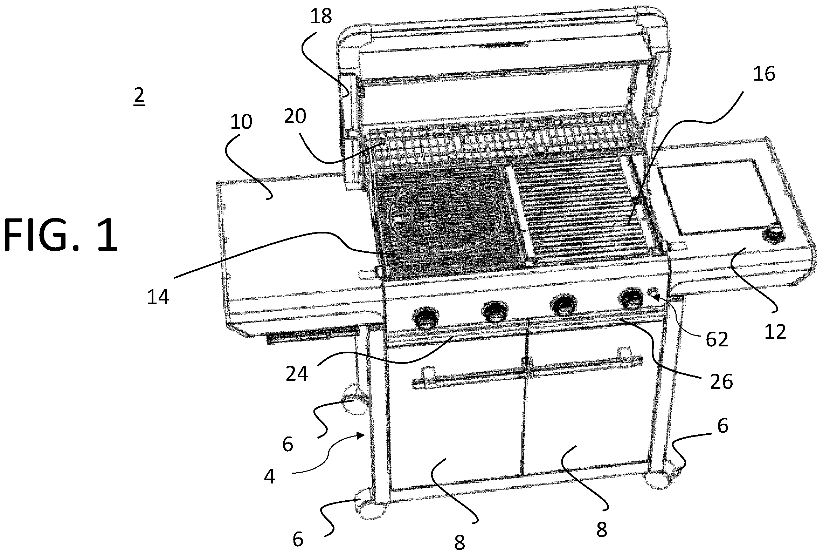

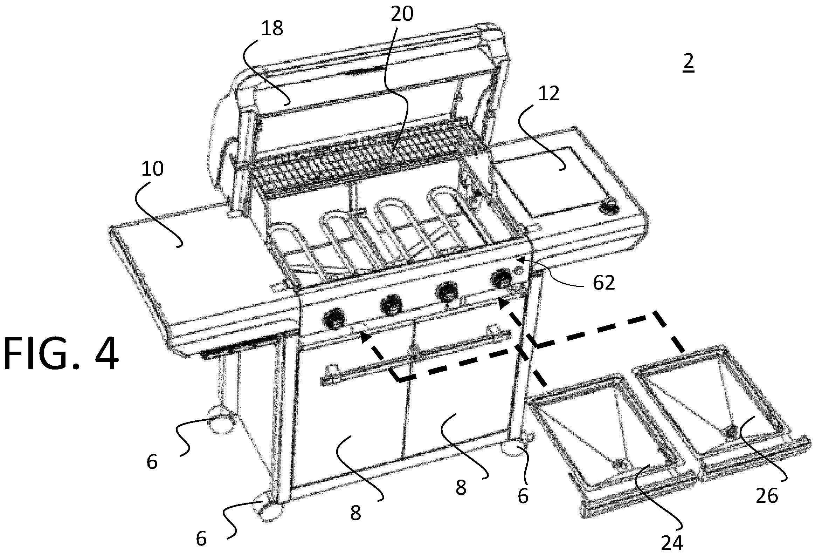

Les Figures 1 à 4 représentent un barbecue 2 en configuration d'utilisation et en configuration de nettoyage. Ici, l'expression « configuration d'utilisation » fait référence à une configuration dans laquelle tous les éléments du barbecue 2 sont montés sur le barbecue 2 tandis que l'expression « configuration de nettoyage » fait référence à une configuration dans laquelle au moins un élément du barbecue 2 est démonté pour être nettoyé.

Le barbecue 2 peut comporter un chariot 4. Le chariot 4 peut comprendre une structure, par exemple une structure métallique, bois ou plastique. La structure peut comprendre des jambes s'étendant verticalement. Les jambes présentent des extrémités inférieures et des extrémités supérieures. La structure peut comprendre des traverses inférieures s'étendant horizontalement et reliant les extrémités inférieures des jambes. La structure peut comprendre des traverses supérieures s'étendant horizontalement et reliant les extrémités supérieures des jambes. Le chariot 4 peut comprendre des roues 6 montées sous la structure aux extrémités inférieures des jambes. Le chariot 4 peut comprendre une paroi latérale gauche, une paroi latérale droite et une paroi latérale arrière montées sur la structure. La paroi latérale gauche, la paroi latérale droite et la paroi de fond délimitent un volume de rangement dans lequel peuvent être disposés une bombonne de gaz, un récipient pour récupérer des graisses de cuisson, des ustensiles de cuisines, des aliments ou autre. Le chariot 4 peut comprendre des portes avant 10 configurées pour être ouvertes et en alternance fermées par un utilisateur afin d'accéder au volume de rangement. Ici, les portes avant sont montées pivotantes sur les jambes.

Le barbecue 2 peut comporter un plan de travail latéral gauche 10 et un plan de travail latéral droit 12. Le plan de travail latéral gauche 10 et le plan de travail latéral droit 12 peuvent être montés sur le chariot 4. Le plan de travail latéral gauche 10 et le plan de travail latéral droit 12 peuvent s'étendre dans un même plan.

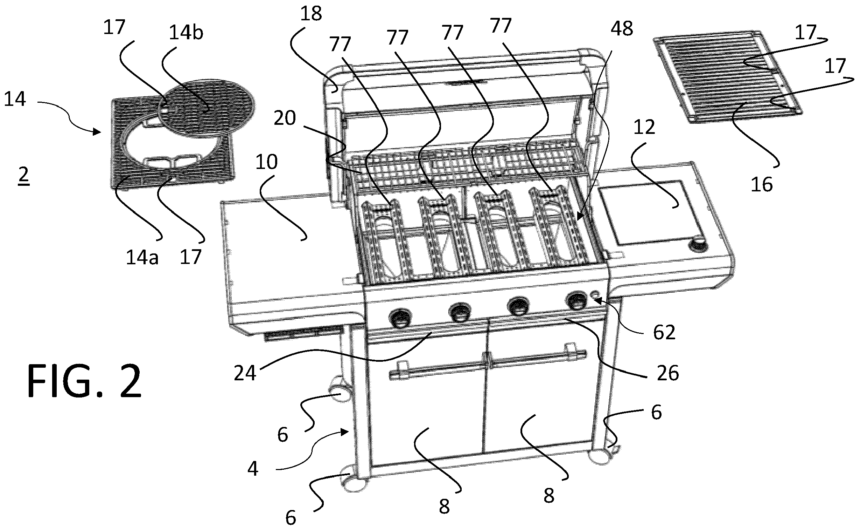

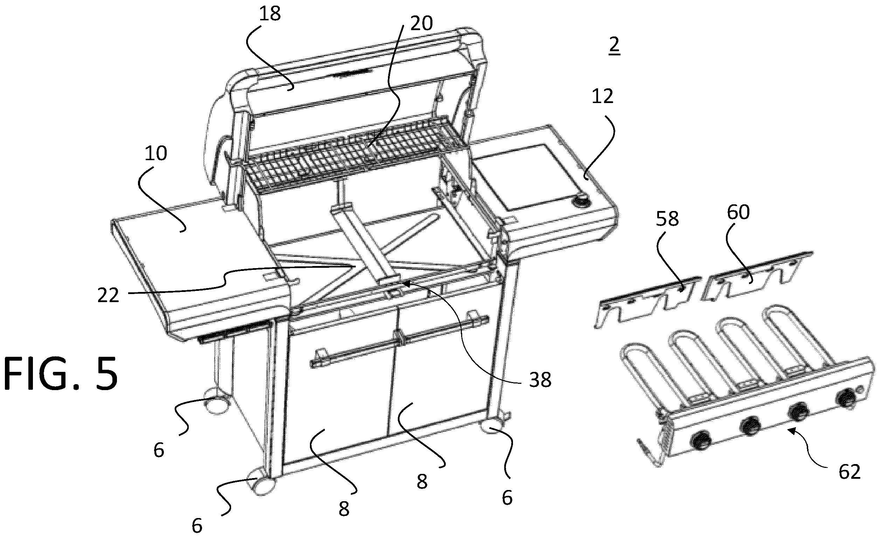

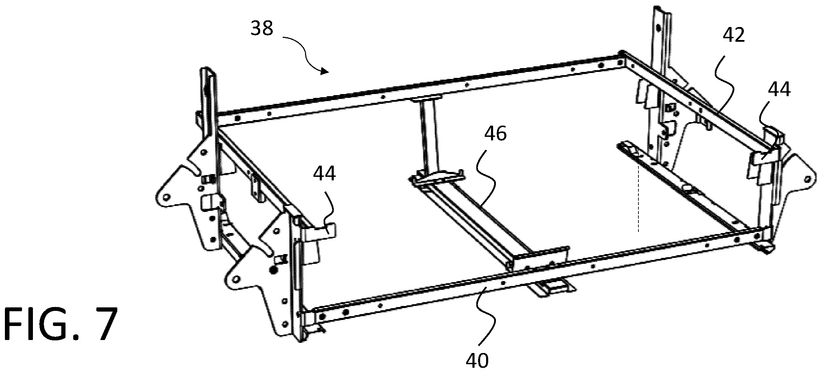

Le barbecue 2 peut comporter une grille de cuisson 14 et une plaque de cuisson 16. La grille de cuisson 14 et la plaque de cuisson 16 peuvent être configurées pour être montées sur un cadre 38, ou cadre soudé 38, (plus visible aux Figures 5 et 7 et décrit plus loin) et en alternance démontées du cadre 38. Ici, la grille de cuisson 14 et la plaque de cuisson 16 s'étendent dans le même plan que le plan de travail latéral gauche 10 et le plan de travail latéral droit 12. La grille de cuisson 14 (plus visible à la Figure 2) peut comprendre une première partie 14a rectangulaire pourvue d'une ouverture circulaire et une seconde partie 14b circulaire configurée pour être montée dans l'ouverture circulaire et en alternance démontée de l'ouverture circulaire. La plaque de cuisson 16 peut être rectangulaire. La grille de cuisson 14 et la plaque de cuisson 16 peuvent être pourvues d'orifices 17 dont l'utilité sera apparente plus loin.

Le barbecue 2 peut comporter un capot 18 monté sur le chariot 4. Le capot 18 peut être configuré pour être relevé et en alternance abaissé par l'utilisateur afin d'accéder à la grille de cuisson 14 et à la plaque de cuisson 16 et en alternance afin de recouvrir la grille de cuisson 14 et la plaque de cuisson 16. Ici, le capot 18 est monté pivotant sur le chariot 4.

Le barbecue 2 peut également comporter une grille de mijotage 20. La grille de mijotage 20 peut être configurée pour être montée sur le capot 18 et/ou sur des parevents 21 et en alternance démontée du capot 18 ou des para-vents 21. Ici, la grille de mijotage 20 s'étend au-dessus de la grille de cuisson 14 et de la plaque de cuisson 16. La grille de mijotage 20 est moins profonde (dans une direction d'avant en arrière) que la grille de cuisson 14 et la plaque de cuisson 16. La grille de cuisson peut être remplacée par une broche de rôtisserie ou autre.

Le barbecue 2 peut comporter un écran de protection de chaleur 22 (plus visible à la Figure 5). L'écran de protection de chaleur 22 peut s'étendre horizontalement sensiblement à hauteur des portes avant 8 du chariot 4.

Le barbecue 2 peut comporter un tiroir de collection de graisses de cuisson gauche 24 et un tiroir de collection de graisses de cuisson droit 26. Le tiroir de collection de graisses de cuisson gauche 24 et le tiroir de collection de graisses de cuisson droit 26 peuvent être montés coulissants sur le cadre 38, par exemple sur une partie inférieure 40 du cadre 38. Le tiroir de collection de graisses de cuisson gauche 24 et le tiroir de collection de graisses de cuisson droit 26 peuvent être configurés pour être montés sur le cadre 38 par une face avant du barbecue 2 et en alternance démontés du cadre 38 par la face avant du barbecue 2. Le tiroir de collection de graisses de cuisson gauche 24 peut être disposé sous la grille de cuisson 14 afin de collecter les graisses de cuisson d'aliments disposés sur la grille de cuisson 14. Le tiroir de collection de graisses de cuisson droit 26 peut être disposé sous la plaque de cuisson 16 afin de collecter les graisses de cuisson d'aliments disposés sur la plaque de cuisson 16. Ici, le tiroir de collection de graisses de cuisson gauche 24 et le tiroir de collection de graisses de cuisson droit 26 sont identiques. Aussi, seul le tiroir de collection de graisses de cuisson gauche 24 est décrit plus en détail par la suite. Dans une forme de réalisation, la taille du tiroir de collection de graisses de cuisson gauche 24 et la taille du tiroir de collection de graisses de cuisson droit 26 peuvent être différentes en fonction de la largeur et/ou du nombre de brûleurs 68 du barbecue 2.

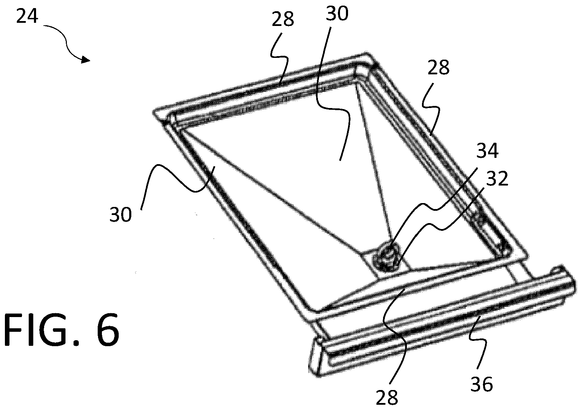

Le tiroir de collection de graisses de cuisson gauche 24 (plus visible à la Figure 6) peut comprendre des parois latérales 28 et une paroi de fond 30. La paroi de fond 30 peut comprendre des portions inclinées par rapport à l'horizontale et une portion horizontale. Les portions inclinées peuvent converger vers la portion horizontale. Ici, les portions inclinées sont trapézoïdales.

Le tiroir de collection de graisses de cuisson gauche 24 peut comprendre un orifice de vidange 32. L'orifice de vidange 32 permet d'effectuer une vidange des graisses de cuisson collectées dans le tiroir de collection de graisses de cuisson gauche 24 sans démonter complètement le tiroir de collection de graisses de cuisson gauche 24 du cadre 38 et sans pencher ou retourner le tiroir de collection de graisses de cuisson gauche 24. Ainsi, les risques de salissure du barbecue 2 de l'utilisateur sont réduits. L'accès par la face avant au tiroir de collection de graisses de cuisson gauche 24 est également facilité. L'orifice de vidange 32 peut être disposé sur la portion horizontale de la paroi de fond 30. Ainsi, la paroi de fond 30 est conformée de manière à guider les graisses de cuisson vers l'orifice de vidange 32 par écoulement. L'orifice de vidange 32 permet d'effectuer une vidange des graisses de cuisson collectées dans le tiroir de collection de graisses de cuisson gauche 24 en laissant un minimum ou sans laisser de graisses de cuisson résiduelles. Ainsi, le nettoyage du tiroir de collection de graisses de cuisson gauche 24 est facilité.

Le tiroir de collection de graisses de cuisson gauche 24 peut comprendre un obturateur ou bouchon 34 configuré pour obturer l'orifice de vidange 32 et en alternance désobturer l'orifice de vidange 32. L'obturateur 34 permet d'effectuer la vidange des graisses de cuisson collectées dans le tiroir de collection de graisses de cuisson gauche 24 de manière contrôlée par exemple lorsque les graisses de cuissons ne sont plus brûlantes. Ainsi, le risque de brûlure de l'utilisateur est réduit. L'obturateur 34 permet également d'éviter de manipuler le tiroir de collection de graisses de cuisson gauche 24 pour vider l'eau. Cela diminue le risque de renverser le tiroir de collection de graisses de cuisson gauche 24 lors de l'extraction de celui-ci à cause de sa taille ou son poids.

Le barbecue (2) peut comporter un organe de commande (non représenté) configuré pour être déplacé manuellement par l'utilisateur entre une première position de commande dans laquelle l'organe de commande commande (mécaniquement ou électroniquement) l'obturateur (34) de manière à obturer l'orifice de vidange (32) et en alternance dans une seconde position de commande dans laquelle l'organe de commande commande (mécaniquement ou électroniquement) l'obturateur (34) de manière à désobturer l'orifice de vidange (32).

L'organe de commande peut être disposé à l'extérieur du collecteur de graisses de cuisson (à l'extérieur d'un volume recevant l'eau et/ou les graisses de cuisson) de manière à permettre le déplacement de l'organe de commande par l'utilisateur sans toucher l'eau et/les graisses de cuisson.

L'organe de commande peut prendre la forme d'un bouton ou d'un levier. L'organe de commande peut être monté sur une poignée du tiroir de collection de graisses de cuisson gauche 24. L'organe de commande peut prendre la forme d'un tige prolongeant l'obturateur (34) verticalement vers le haut au-dessus d'un niveau d'eau et/ou de graisses de cuissons.

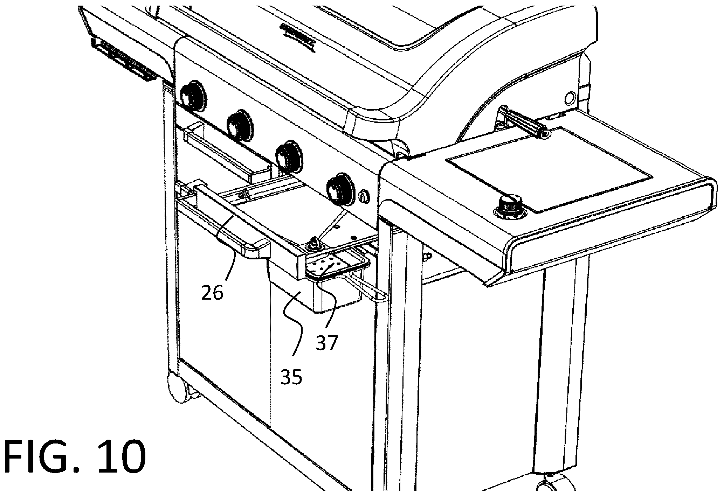

Le tiroir de collection de graisses de cuisson gauche 24 peut être disposé au-dessus du récipient disposé dans le volume de rangement de sorte que le récipient puisse récupérer les graisses de cuisson en provenance du plateau de cuisson gauche 24 lorsque l'obturateur 34 désobture l'orifice de vidange 32. Alternativement ou également, les graisses peuvent être récupérées par un accessoire 35 qui s'accroche de façon permanente ou non sous le tiroir de collection de graisses de cuisson gauche 24. Cet accessoire peut être équipé d'un filtre ou grille 37 qui permet de séparer aisément la partie liquide des déchets solide lors de la récupération des graisses de cuisson. Cette disposition est particulièrement avantageuse dans lorsque le barbecue 2 impose un traitement strict des déchets ménagers. La Figure 10 illustre une forme de réalisation d'un tel accessoire 35 disposé sous le tiroir de collection de graisses de cuisson droit 26. L'accessoire 35 peut être dimensionné de manière à présenter un volume égal à un volume d'eau prédéterminé à verser par l'utilisateur dans le tiroir de collection de graisses de cuisson gauche 24 afin d'assurer une hydratation suffisante des aliments disposés sur la plaque de cuisson 16 ou la grille de cuisson 14. L'accessoire 35 forme ainsi un doseur et facilite le remplissage du tiroir de collection de graisses de cuisson gauche 24 en eau par l'utilisateur.

Le tiroir de collection de graisses de cuisson gauche 24 peut avoir une capacité d'au moins 1 Litre pour un brûleur 68, et préférablement une capacité d'au moins 1.5 Litre pour deux brûleurs 68. Le tiroir de collection de graisses de cuisson gauche 24 peut être rempli d'eau à travers les orifices 17. Les orifices 17 permettent non seulement aux graisses de cuisson d'être collectées par le tiroir de collection de graisses de cuisson gauche 24 mais alternativement ou également de verser de l'eau dans le tiroir de collection de graisses de cuisson gauche 24 afin d'éviter que les graisses de cuisson n'accrochent au tiroir de graisses de cuisson sans démonter le tiroir de collection de graisses de cuisson gauche 24. Ainsi, le nettoyage du tiroir de collection de graisses de cuisson gauche 24 peut être facilité. L'eau permet de faciliter l'évacuation des graisses de cuisson collectées par le tiroir de collection de graisses de cuisson gauche 24 et de faciliter le nettoyage du tiroir collection de graisses de cuisson gauche 24. L'eau permet également de créer une quantité de vapeur suffisante lors de la cuisson afin d'hydrater les aliments disposés sur la grille de cuisson 14.

Le tiroir de collection de graisses de cuisson gauche 24 peut comprendre une poignée 36 monté sur une paroi latérale avant 28 afin de faciliter la manipulation du tiroir de collection de graisses de cuisson gauche 24.

Le barbecue 2 peut comporter un cadre 38 (plus visible aux Figures 5 et 7). Le cadre 38 peut être monté sur le chariot 4 ou faire partie intégrante de la structure du chariot 4. Le cadre 38 peut s'étendre au-dessus de l'écran de protection de chaleur 22 afin de permettre le montage et en alternance le démontage du tiroir de collection de graisses de cuisson gauche 24 et du tiroir de collection de graisses de cuisson droit 26. Le cadre 38 peut comprendre une partie inférieure 40 et une partie supérieure 42. La partie inférieure 40 peut comprendre une portion avant montée à l'avant du chariot 4 et des portions latérales montées sur les côtés du chariot 4 et s'étendant de l'avant du chariot 4 vers l'arrière du chariot 4. La partie supérieure 42 peut comprendre une portion arrière montée à l'arrière du chariot 4 et des portions latérales montées sur les côtés du chariot 4 et s'étendant de l'arrière du chariot 4 vers l'avant du chariot 4. Les portions latérales de la partie supérieure 42 du support 38 peuvent comprendre des extrémités distales formant des retours ou butées 44.

La portion avant de la partie inférieure 40 peut être connectée à la portion arrière de la partie supérieure 42 par une portion centrale 46 formant écran. La portion centrale 46 peut être agencée au-dessus d'un interstice entre le tiroir de collection de graisses de cuisson gauche 24 et le tiroir de collection de graisses de cuisson droit 26 de manière à empêcher les graisses de cuisson de tomber dans le volume de rangement.

La portion centrale 46 peut comprendre une portion gauche inclinée par rapport à l'horizontale de manière à guider les graisses de cuisson par écoulement vers le tiroir de collection de graisses de cuisson gauche 24 et une portion droite inclinée par rapport à l'horizontale de manière à guider les graisses de cuisson par écoulement vers le tiroir de collection de graisses de cuisson droit 26.

Le barbecue 2 peut comporter une cuve de cuisson 48 (plus visible aux Figures 2, 3 et 5). La cuve de cuisson 48 peut comprendre une paroi latérale gauche 50, une paroi latérale droite 52, une paroi latérale arrière gauche 54, une paroi latérale arrière droite 56, une paroi latérale avant gauche 58 et une paroi latérale avant droite 60. La paroi latérale gauche 50, la paroi latérale droite 52, la paroi latérale arrière gauche 54, la paroi latérale arrière droite 56, la paroi latérale avant gauche 58 et la paroi latérale avant droite 60 peuvent être configurées de manière à être montées sur le cadre 38 et en alternance démontées du cadre 38.

La paroi latérale gauche 50, la paroi latérale droite 52, la paroi latérale arrière gauche 54, la paroi latérale arrière droite 56, la paroi latérale avant gauche 58 et la paroi latérale avant droite 60 peuvent être inclinées par rapport à la verticale de manière à guider les graisses de cuisson vers le tiroir de collection de graisse de cuisson 24 et le tiroir de collection de graisse de cuisson droit 26 par écoulement.

La paroi latérale gauche 50, la paroi latérale droite 52, la paroi latérale arrière gauche 54, la paroi latérale arrière droite 56, la paroi latérale avant gauche 58 et la paroi latérale avant droite 60 peuvent comprendre des bords supérieurs et des bords latéraux.

Le bord supérieur de paroi latérale gauche 50, le bord supérieur de la paroi latérale droite 52, le bord supérieur de la paroi latérale arrière gauche 54 et le bord supérieur de la paroi latérale arrière droite 56 peuvent être conformés pour reposer sur la partie supérieure 42 du cadre 38 ou du bloc technique gaz 62. Le bord supérieur de paroi latérale gauche 50, le bord supérieur de la paroi latérale droite 52, le bord supérieur de la paroi latérale arrière gauche 54, le bord supérieur de la paroi latérale arrière droite 56 peuvent comprendre des crochets ou langues permettant de crocheter la partie supérieure 42 du cadre 38 . Ainsi, la paroi latérale gauche 50, la paroi latérale droite 52, la paroi latérale arrière gauche 54 et la paroi latérale arrière droite 56 sur la partie supérieure 42 peuvent être verrouillées sur le support horizontalement et en alternance déverrouiller horizontalement du cadre 38.

La paroi latérale gauche 50, la paroi latérale droite 52, la paroi latérale arrière gauche 54, la paroi latérale arrière droite 56, la paroi latérale avant gauche 58 et la paroi latérale avant droite 60 peuvent être conformées pour assurer une étanchéité latérale de la cuve de cuisson 48.

Ici, un bord latéral de la paroi latérale gauche 50 est conformé pour reposer sur ou sous un bord latéral de la paroi latérale arrière gauche 54. Un autre bord latéral de la paroi latérale gauche 50 est conformé pour reposer sur ou sous un bord latéral de la paroi latérale avant gauche 58. Un bord latéral de la paroi latérale droite 52 est conformé pour reposer sur ou sous un bord latéral de la paroi latérale arrière droite 56. Un autre bord latéral de la paroi latérale droite 52 est conformé pour reposer sur ou sous un bord latéral de la paroi latérale avant droite 60. Un bord latéral de la paroi latérale arrière gauche 54 est conformé pour reposer sur ou sous un bord latéral de la paroi latérale arrière droite 56. Un bord latérale de la paroi latérale avant gauche 58 est conformé pour reposer sur ou sous un bord latéral de la paroi latérale avant droite 60.

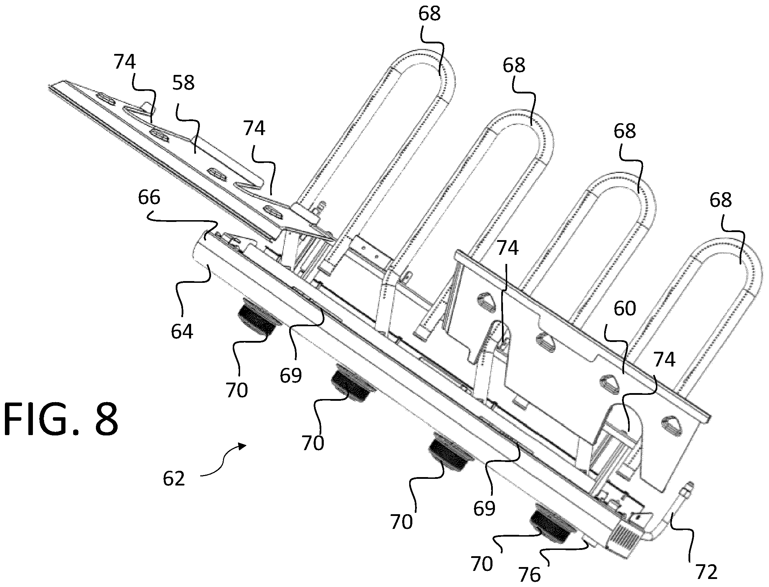

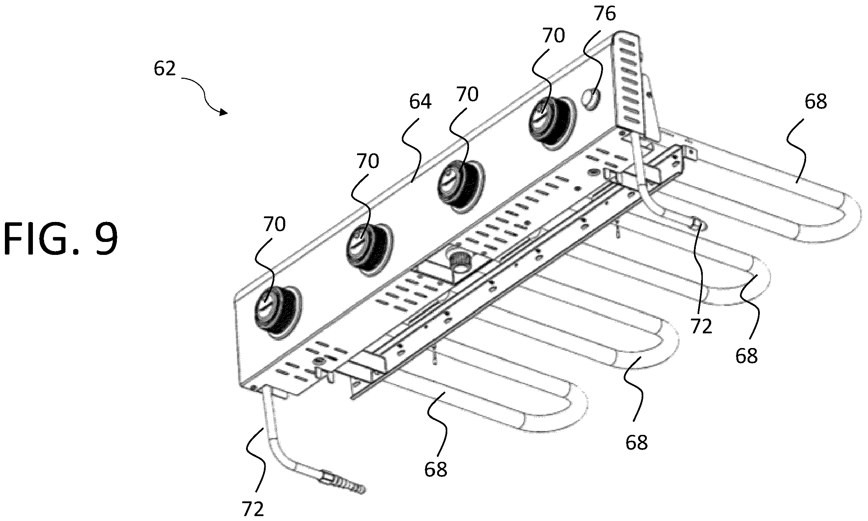

Le barbecue 2 peut comporter un bloc technique gaz 62, également appelé bloc gaz ou bloc. Le bloc technique gaz 62 (plus visible aux Figures 8 et 9) comporte un boîtier, des brûleurs 68, des composants gaz et des composants électriques. Le boîtier peut comprendre une façade avant 64 et une façade arrière 66 qui sert d'écran de chaleur. La façade arrière 66 peut comprendre des encoches 69.

La paroi latérale avant gauche 58 et la paroi latérale avant droite 60 de la cuve de cuisson 48 peuvent être configurées pour être montées sur le bloc technique gaz 62 et en alternance démontées du bloc technique gaz 62. La paroi latérale avant gauche 58 et la paroi latérale avant droite 60 de la cuve de cuisson 48 peuvent être configurées pour être verrouillées sur le bloc technique gaz 62 et en alternance déverrouillée du bloc technique gaz 62.

Ici, le bord supérieur de la paroi latérale avant gauche 58 et le bord supérieur de la paroi latéral avant droite 60 de la cuve de cuisson 48 sont conformés pour reposer sur un bord supérieur de la façade arrière 66. Le bord supérieur de la paroi latérale avant gauche 58 et le bord supérieur de la paroi latéral avant droite 60 de la cuve de cuisson 48 comprennent des crochets ou langues conformés pour être reçus dans les encoches 69 du boîtier afin de verrouiller horizontalement et en alternance déverrouiller horizontalement la paroi latérale avant gauche 58 et la paroi latérale avant droite 60 de la cuve de cuisson 48 sur le bloc technique gaz 62.

Les composants gaz peuvent comprendre, des boutons de régulation d'alimentation en gaz 70 des brûleurs 68 et/ou des conduits d'alimentation en gaz 72 des brûleurs 68. Les boutons de régulation d'alimentation en gaz 70 peuvent être montés sur la façade avant 64 du boîtier technique gaz 62.

La paroi latérale avant gauche 58 et la paroi latérale avant droit 60 de la cuve de cuisson 48 peuvent comprendre des découpes ou encoches 74 pour permettre le passage des brûleurs 68 à travers la paroi latérale avant gauche 58 et la paroi latérale avant droit 60 de la cuve de cuisson 48 lorsque la paroi latérale avant gauche 58 et la paroi latérale avant droit 60 de la cuve de cuisson 48 sont montées sur le bloc technique gaz 62.

Les composant électriques peuvent comprendre une batterie, un bouton de mise à feu 76 des brûleurs 68, des indicateurs lumineux de mise à feu des brûleurs 68, un circuit électronique connectant la batterie au bouton de mise à feu des brûleurs 68 et/ou un circuit électronique connectant la batterie aux indicateurs lumineux de mise à feu des brûleurs 68. Le bouton de mise à feu 76 des brûleurs 68 et les indicateurs lumineux de mise à feu des brûleurs 68 peuvent être montés sur la façade avant 64 du boîtier. Les indicateurs lumineux de mise à feu des brûleurs 68 peuvent être intégrés aux boutons de régulation d'alimentation en gaz 70 des brûleurs 68.

Le bloc technique gaz 62 peut comprendre un bouclier thermique configuré pour isoler thermiquement les boutons de régulation d'alimentation gaz 70 des brûleurs 68, la batterie, le bouton de mise à feu 76 des brûleurs 68, les indicateurs lumineux de mise à feu des brûleurs 68, le circuit électronique connectant la batterie au bouton de mise à feu 76 des brûleurs 68 et/ou le circuit électronique connectant la batterie aux indicateurs lumineux de mise à feu des brûleurs 68. Ainsi, le risque d'altération des boutons de régulation d'alimentation gaz 70 des brûleurs 68, de la batterie, du bouton de mise à feu 76 des brûleurs 68, des indicateurs lumineux de mise à feu des brûleurs 68, du circuit électronique connectant la batterie au bouton de mise à feu 76 des brûleurs 68 et/ou du circuit électronique connectant la batterie aux indicateurs lumineux de mise à feu des brûleurs 68 peut être réduit et la durée de vie du barbecue 2 peut être allongée. Le bouclier thermique peut être formé directement par la façade arrière 66 du boîtier ou peut être disposé entre la façade avant 64 du boîtier et la façade arrière 66 du boîtier. Le bouclier thermique peut comporter de la tôle aluminée, tôle zinguée, tôle émaillée, tôle inox. Des isolants spécifiques en fibre thermique peuvent compléter la protection thermique des composants électroniques présents dans le bloc technique gaz 62.

Le bloc technique gaz 62 peut être configuré pour être monté sur le cadre 38 d'un seul tenant et en alternance démonté du cadre 38 d'un seul tenant (d'un seul ensemble sans séparer le boîtier, les brûleurs 68, les composants électroniques et/ou les composants gaz). Ainsi, le montage et le démontage du bloc technique gaz 62 peut être facilité. Ici, le bloc technique gaz 62 est configuré pour être monté sur le cadre 38 par une face avant du barbecue 2 et en alternance démonté du cadre 38 par la face avant du barbecue 2. Le bloc 62 peut être configuré pour être monté sur le cadre 38 par mouvement (avec ou sans coulissement) horizontal d'avant en arrière et/ou par mouvement (avec ou sans coulissement) vertical de haut en bas et démonté du cadre 38 par mouvement (avec ou sans coulissement) horizontal d'arrière en avant et/ou par mouvement (avec ou sans coulissement) vertical de bas en haut.

Le bloc technique gaz 62 peut être configuré pour être verrouillé sur le cadre 38 et en alternance déverrouillé du cadre 38. Ainsi, le risque de démontage accidentel du bloc 62 est réduit. Ici, le bloc est verrouillé horizontalement sur le cadre 38 et déverrouillé horizontalement du cadre 38 par l'intermédiaire de la paroi latérale avant gauche 58 et la paroi latérale avant droite 60 de la cuve de cuisson 48.

Lorsque le bloc technique gaz 62 est monté sur le cadre 38 et la paroi latérale avant gauche 58 et la paroi latérale avant droite 60 de la cuve de cuisson 48 sont montées sur le cadre 38, la façade arrière 66 du boîtier peut venir buter contre le cadre 38, et plus particulièrement contre une face avant des retours 44. La paroi latérale avant gauche 58 et la paroi latérale avant droite 60 de la cuve de cuisson 48 peuvent être montées sur la façade arrière 66 du boîtier et peuvent venir buter contre le cadre 38, et plus particulièrement contre une face arrière des retours 44. Le bloc technique gaz 62 ne peut pas être démonté du cadre 38 par mouvement horizontal d'arrière en avant. Le bloc technique gaz 62 peut être verrouillé horizontalement. Le bloc technique gaz 62 peut être verrouillé verticalement lors de l'insertion de la paroi latérale avant gauche 58 et la paroi latérale avant droite 60 grâce aux encoches 69. Le bloc technique gaz 62 peut ne pas être verrouillé verticalement dans certaines formes de réalisation.

Lorsque le bloc technique gaz 62 est monté sur le support 38 et la paroi latérale avant gauche 58 et la paroi latérale avant droite 60 de la cuve de cuisson 48 sont démontées du support 38, la façade arrière 66 du boîtier peut venir buter contre le support 38, et plus particulièrement contre la face avant des retours 44. En revanche, la paroi latérale avant gauche 58 et la paroi latérale avant droite 60 de la cuve de cuisson 48 peuvent être démontées de la façade arrière 66 du boîtier et peuvent ne plus venir buter contre le support 38, et plus particulièrement contre la face arrière des retours 44. Le bloc 62 peut être démonté du support 38 par mouvement horizontal d'arrière en avant ou par mouvement vertical de bas en haut..

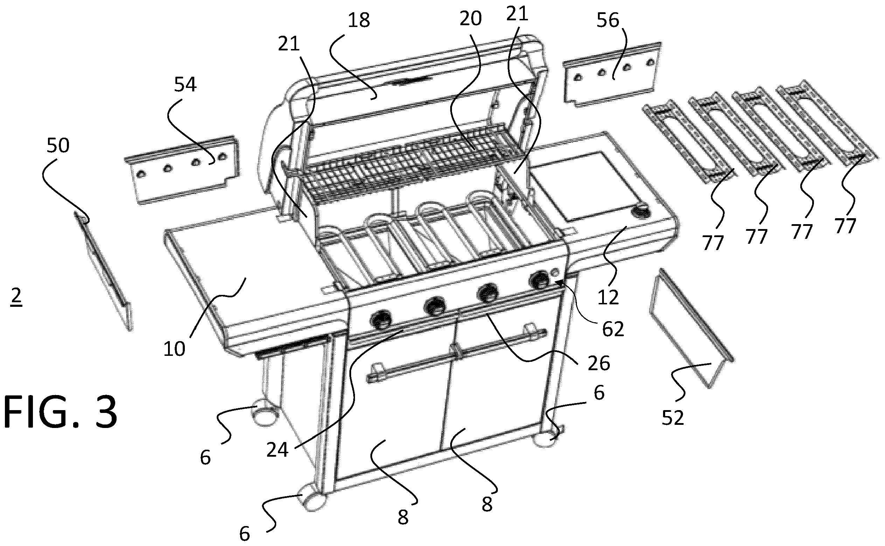

Le barbecue 2 peut comporter des pare-brûleurs 77 (plus visibles aux Figures 2 et 3) configurés pour être monté sur les brûleurs 68 et en alternance démonté des brûleurs 68. Ici, les pare-brûleurs 77 sont simplement posés au-dessus des brûleurs 68. Les pare-brûleurs 77peuvent être conformés pour permettre aux graisses de cuisson de tomber dans le tiroir de collection de graisse de cuisson gauche 24 et dans le tiroir de collection de graisse de cuisson droit 26 sans tomber sur les brûleurs 68. Ici, les pare-brûleurs 77comprennent des ouvertures centrales.

Dans la configuration d'utilisation les graisses de cuisson des aliments disposés sur la grille de cuisson 14, sur la plaque de cuisson 16 et/ou sur la grille de mijotage 20 peuvent tomber dans la cuve de cuisson 48 et peuvent être collectées par le tiroir de collection de graisses de cuisson gauche 24 et le tiroir de collection de graisses de cuisson droit 26. Les graisses de cuisson dans le tiroir de collection de graisse de cuisson gauche 24 et dans le tiroir de collection de graisse de cuisson droit 26 peuvent être réutilisées pour la réalisation de sauces. Alternativement, les graisses de cuisson dans le tiroir de collection de graisses de cuisson gauche 24 et dans le tiroir de collection de graisses de cuisson droit 26 peuvent être récupérées dans le récipient disposé dans le volume de rangement ou par l'autre accessoire 35 dédié à cet usage, et déposées en déchetterie par l'utilisateur une fois le récipient plein. Le barbecue 2 peut être alors être transformé de la configuration d'utilisation à une des configurations de nettoyage afin de nettoyer tout ou partie des éléments du barbecue 2.

Dans une configuration de nettoyage, la paroi latérale gauche 50, la paroi latérale droite 52, la paroi latérale arrière gauche 54 et la paroi latérale arrière droite 56, la paroi latérale avant gauche 58 peuvent être démontées du support cadre 38 et lavées au lave-vaisselle ou à la main. La paroi latérale avant gauche 58 et la paroi latérale avant droite 60 de la cuve de cuisson 48 peuvent être démontées de la façade arrière 66 du boîtier et lavées au lave-vaisselle ou à la main. Les pare-brûleurs 77 peuvent être démontés des brûleurs 68 et lavés au lave-vaisselle ou à la main. Le bloc technique gaz 62 peut être démonté du cadre 38 (si besoin) pour nettoyage et/ou maintenance. Le tiroir de collection de graisses de cuisson gauche 24 et le tiroir de collection de graisses de cuisson droit 26 peuvent être démontés du support et lavés au lave-vaisselle ou à la main.

Comme il va de soi, la présente demande ne se limite pas à la seule forme d'exécution décrite ci-dessus à titre d'exemple, elle en embrasse au contraire toutes les variantes de réalisation.

Dans une variante de réalisation le barbecue 2 n'est pas un barbecue à gaz. Le barbecue 2 peut être un barbecue électrique. Le bloc technique gaz 62 peut être remplacer par un bloc technique électrique comportant des résistances électriques à la place des brûleurs 68 et des boutons de régulation en électricité à la place de bouton de régulation en gaz 70 des brûleurs 68.

Dans une variante de réalisation le barbecue 2 n'intègre pas le chariot 4. Le barbecue 2 peut être distinct du chariot 4. Le barbecue 2 peut être monté sur le chariot 4 et en alternance démonté du chariot 4. Ainsi, lorsque le barbecue 2 est défectueux, le barbecue 2 peut être remplacé tandis que le chariot 4 peut être conservé ou vice versa. La maintenance peut ainsi être effectuée plus facilement et à moindre coût pour l'utilisateur. Le barbecue 2 peut également être configuré pour être verrouillé sur le chariot 4 et en alternance verrouillé du chariot 4. Ainsi, le risque de démontage accidentel du barbecue 2 du chariot 4 en configuration d'utilisation ou en configuration de nettoyage est réduit.

## Revendications

1. Barbecue (2) comportant:
- un cadre (38) ;
- un bloc (62) comprenant un organe de génération de chaleur (68) et un organe de régulation d'alimentation (70) couplé à l'organe de génération de chaleur (68), le bloc (62) étant configuré pour être monté sur le cadre (38) d'un seul tenant et en alternance démonté du cadre (38) d'un seul tenant ; et
- une cuve de cuisson (48) comportant une paroi latérale (58, 60) ;
**caractérisé en ce que** la paroi latérale (58, 60) est configurée pour être montée sur le bloc (62) et en alternance démontée du bloc (62) de manière à ce que le bloc (62) soit verrouillé sur le cadre (38) et en alternance déverrouillé du cadre (38) par l'intermédiaire de la paroi latérale (58, 60).

2. Le barbecue (2) selon la revendication 1, dans lequel le barbecue (2) est un barbecue à gaz, l'organe de génération de chaleur (68) est un brûleur et l'organe de régulation d'alimentation (70) est un organe de régulation d'alimentation en gaz.

3. Le barbecue (2) selon la revendication 1 ou 2, dans lequel le barbecue (2) comporte un collecteur de graisses de cuisson (24, 26) disposé à l'aplomb du bloc (62).

4. Le barbecue (2) selon l'une quelconque des revendications 1 ou 2, dans lequel le bloc (62) est configuré pour être monté sur le cadre (38) par une face avant du barbecue (2) et en alternance démonté du cadre (38) par la face avant du barbecue (2).

5. Le barbecue (2) selon la revendication 3, dans lequel le bloc (62) est configuré pour être monté sur le cadre (38) par mouvement horizontal d'avant en arrière et en alternance démonté du support par mouvement horizontal d'arrière en avant ; et/ou
dans lequel le bloc (62) est configuré pour être monté sur le cadre (38) par mouvement vertical de haut en bas et en alternance démonté du cadre (38) par mouvement vertical de bas en haut.

6. Le barbecue (2) selon la revendication 1, dans lequel le bloc peut être configuré pour être verrouillé horizontalement sur le cadre et en alternance déverrouillé horizontalement du cadre.

7. Le barbecue (2) selon la revendication 1, dans lequel la paroi latérale (58, 60) est une paroi latérale avant.

8. Le barbecue (2) selon la revendication 7, dans lequel la paroi latérale (58, 60) est montée sur boîtier.

9. Le barbecue (2) selon la revendication 8, dans lequel la paroi latérale (58, 60) comprend des crochets conformés pour être reçus dans des encoches (69) du boîtier.

10. Le barbecue (2) selon la revendication 9, dans lequel la paroi latérale (58, 60) comprend une découpe (74) pour permettre le passage des brûleurs (68) l'organe de génération de chaleur (68)

11. Le barbecue (2) selon l'une quelconque des revendications 1 à 10, dans lequel le bloc (62) comprend en outre : un boîtier ; une batterie ; un organe de mise à feu (76) couplé à l'organe de génération de chaleur (68); un indicateur lumineux de mise à feu couplé à l'organe de génération de chaleur (68) ; un circuit électronique connectant la batterie à l'organe de mise à feu (76) ; et/ou au moins un circuit électronique connectant la batterie à l'indicateur lumineux de mise à feu (76).

12. Le barbecue (2) selon la revendication 11, dans lequel le bloc (62) comprend un bouclier thermique configuré pour isoler thermiquement l'organe de régulation d'alimentation (70) ; la batterie ; l'organe de mise à feu (76) ; l'indicateur lumineux de mise à feu ; le circuit électronique connectant la batterie à l'organe de mise à feu (76) ; et/ou le circuit électronique connectant la batterie à l'indicateur lumineux de mise à feu (76).

## Patentansprüche

1. Grill (2) mit:
- einem Rahmen (38);
- einem Block (62), der ein Wärmeerzeugungselement (68) und ein Versorgungssteuerungselement (70) umfasst, die mit dem Wärmeerzeugungselement (68) gekoppelt sind, wobei der Block (62) so konfiguriert ist, dass er in einem Stück auf dem Rahmen (38) montiert und abwechselnd in einem Stück vom Rahmen (38) demontiert werden kann; und
- einer Kochwanne (48) mit einer Seitenwand (58, 60);
**dadurch gekennzeichnet, dass** die Seitenwand (58, 60) so ausgebildet ist, dass sie auf dem Block (62) montiert und wechselweise von dem Block (62) demontiert werden kann, so dass der Block (62) mit dem Rahmen (38) verriegelt und wechselweise über die Seitenwand (58, 60) vom Rahmen (38) entriegelt wird.

2. Grill (2) nach Anspruch 1, wobei der Grill (2) ein Gasgrill ist, das Wärmeerzeugungselement (68) ein Brenner ist und das Versorgungssteuerungselement (70) ein Gasversorgungssteuerungselement ist.

3. Grill (2) nach Anspruch 1 oder 2, wobei der Grill (2) einen direkt über dem Block (62) angeordneten Kochfettauffangbehälter (24, 26) aufweist.

4. Grill (2) nach einem der Ansprüche 1 oder 2, wobei der Block (62) so konfiguriert ist, dass er über eine Vorderseite des Grills (2) auf dem Rahmen (38) montiert und wechselweise über die Vorderseite des Grills (2) von dem Rahmen (38) demontiert werden kann.

5. Grill (2) nach Anspruch 3, wobei der Block (62) so konfiguriert ist, dass er durch horizontale Bewegung von vorn nach hinten auf dem Rahmen (38) montiert und wechselweise durch horizontale Bewegen von hinten nach vorn von der Halterung demontiert werden kann; oder
wobei der Block (62) so konfiguriert ist, dass er auf dem Rahmen (38) durch vertikale Bewegung von oben nach unten montiert und wechselweise durch vertikale Bewegung von unten nach oben von dem Rahmen (38) demontiert werden kann.

6. Grill (2) nach Anspruch 1, wobei der Block so konfiguriert werden kann, dass er horizontal auf dem Rahmen verriegelt und wechselweise horizontal vom Rahmen entriegelt werden kann.

7. Grill (2) nach Anspruch 1, wobei die Seitenwand (58, 60) eine vordere Seitenwand ist.

8. Grill (2) nach Anspruch 7, wobei die Seitenwand (58, 60) auf einem Gehäuse montiert ist.

9. Grill (2) nach Anspruch 8, wobei die Seitenwand (58, 60) Haken aufweist, die so geformt sind, dass sie in Kerben (69) des Gehäuses aufgenommen werden können.

10. Grill (2) nach Anspruch 9, wobei die Seitenwand (58, 60) einen Ausschnitt (74) aufweist, um ein Hindurchtreten von Brennern (68) der Wärmeerzeugungseinrichtung (68) zu ermöglichen.

11. Grill (2) nach einem der Ansprüche 1 bis 10, wobei der Block (62) ferner umfasst: ein Gehäuse; eine Batterie; eine Brennvorrichtung (76), die mit der Wärmeerzeugungsvorrichtung (68) gekoppelt ist; eine Zündleuchtanzeige, die mit der Wärmeerzeugungseinrichtung (68) gekoppelt ist; eine elektronische Schaltung, die die Batterie mit der Brennvorrichtung (76) verbindet; und/oder zumindest eine elektronische Schaltung, die die Batterie mit der Zündkontrollleuchte (76) verbindet.

12. Grill (2) nach Anspruch 11, wobei der Block (62) ein Hitzeschild umfasst, das so konfiguriert ist, dass es das Versorgungssteuerungselement (70); die Batterie; die Brennvorrichtung (76); die Zündleuchtanzeige; die die Batterie mit der Brennvorrichtung (76) verbindende elektronische Schaltung; und/oder die die Batterie mit der Zündleuchtanzeige (76) verbindende elektronische Schaltung thermisch isoliert.

## Claims

1. A barbecue (2), comprising:
- a frame (38);
- a unit (62) comprising a heat generating member (68) and a supply regulating member (70) coupled to the heat generating member (68), the unit (62) being configured to be mounted onto the frame (38) in one piece and to be in an alternating manner dismounted from the frame (38) in one piece; and
- a cooking tank (48) having a side wall (58, 60),
**characterized in that** the side wall (58, 60) is configured to be mounted onto the unit (62) and to be in an alternating manner dismounted from the unit (62) in such a manner that the unit (62) is locked onto the frame (38) and is in an alternating manner unlocked from the frame (38) by means of the side wall (58, 60).

2. The barbecue (2) according to claim 1, wherein the barbecue (2) is a gas barbecue, the heat generating member (68) is a burner and the supply regulating member (70) is a gas supply regulating member.

3. The barbecue (2) according to claim 1 or 2, wherein the barbecue (2) comprises a cooking fat collector (24, 26) arranged to be vertically aligned with the unit (62).

4. The barbecue (2) according to any of claims 1 to 2, wherein the unit (62) is configured to be mounted onto the frame (38) through a front face of the barbecue (2) and to be in an alternating manner dismounted from the frame (38) through the front face of the barbecue (2).

5. The barbecue (2) according to claim 3, wherein the unit (62) is configured to be mounted onto the frame (38) using a horizontal movement from front to back and to be in an alternating manner dismounted from the support using a horizontal movement from back to front, and/or
wherein the unit (62) is configured to be mounted onto the frame (38) using a vertical movement from top to bottom and to be in an alternating manner dismounted from the frame (38) using a vertical movement from bottom to top.

6. The barbecue (2) according to claim 1, wherein the unit (62) is able to be configured to be horizontally locked onto the frame (38) and to be in an alternating manner horizontally unlocked from the frame (38).

7. The barbecue (2) according to claim 1, wherein the side wall (58, 60) is a front side wall.

8. The barbecue (2) according to claim 7, wherein the side wall (58, 60) is mounted onto a housing.

9. The barbecue (2) according to claim 8, wherein the side wall (58, 60) comprises hooks shaped to be accommodated in notches (69) of the housing.

10. The barbecue (2) according to claim 9, wherein the side wall (58, 60) comprises a cutout (74) to allow a burner (68) or the heat generating member (68) to pass through.

11. The barbecue (2) according to any of claims 1 to 10, wherein the unit (62) further comprises: a housing; a battery; an ignition member (76) coupled to the heat generating member (68); an ignition indicator light coupled to the heat generating member (68); an electronic circuit connecting the battery to the ignition member (76); and/or at least one electronic circuit connecting the battery to the ignition indicator light (76).

12. The barbecue (2) according to claim 11, wherein the unit (62) comprises: a heat shield configured to thermally insulate the supply regulating member (70); the battery; the ignition member (76); the ignition indicator light; the electronic circuit connecting the battery to the ignition member (76); and/or the electronic circuit connecting the battery to the ignition indicator light (76).
